# EUROPEAN PATENT SPECIFICATION

(11) **EP 3 666 633 B1**
(45) Date of publication and mention of the grant of the patent: **12.05.2021**
(21) Application number: 19215282.5
(22) Date of filing: 11.12.2019
(51) Int. Cl.: B62K 19/32, B62J 11/13

(54) **STEERING LIMITING DEVICE FOR BICYCLES AND SIMILAR VEHICLES AND STEERING UNIT COMPRISING SAID DEVICE**
LENKUNGSBEGRENZUNGSVORRICHTUNG FÜR FAHRRÄDER UND ÄHNLICHE FAHRZEUGE UND LENKEINHEIT MIT DIESER VORRICHTUNG
DISPOSITIF DE LIMITATION DE DIRECTION POUR BICYCLETTES ET VÉHICULES SIMILAIRES ET UNITÉ DE DIRECTION COMPRENANT LEDIT DISPOSITIF

(30) Priority: 12.12.2018 IT 201800011007
(43) Date of publication of application: 17.06.2020
(73) Proprietor: Wilier Triestina S.p.A., 36028 Rossano Veneto (VI) (IT)
(72) Inventor: GASTALDELLO, Michele, 36028 ROSSANO VENETO (VI) (IT); SALOMONI, Claudio, 36100 VICENZA (IT); GENOVESE, Marco, 35027 NOVENTA PADOVANA (PD) (IT)
(74) Representative: Marchioro, Paolo

(56) References cited:
- EP-A1- 1 787 899
- EP-A1- 2 848 508
- EP-A1- 2 933 177
- US-A1- 2012 063 712

## Description

The invention concerns a steering limiting device for bicycles and similar vehicles.

The invention concerns also a steering unit for a bicycle or a similar vehicle comprising said steering limiting device.

Steering limiting devices are currently known, which are suited to be applied between the stem of a handlebar and the head tube of the frame of a bicycle.

A similar steering limiting device of the known type comprises a first part suited to be fixed to the outside of the stem of the handlebar and a second part suited to be fixed to the outside of the head tube of the frame.

The first part comprises an annular fixing portion designed to fix it to the stem of the handlebar, with two radial stop projections extending from said annular fixing portion.

The second part comprises an annular fixing portion designed to fix it to the head tube of the frame, with a reference rod extending from said annular portion, wherein said reference rod is configured to be positioned between the two radial stop projections of the first part.

Said steering limiting device allows a cyclist to rotate the handlebar until one of the two radial stop projections, which is integral with the handlebar, meets the reference rod, which is integral with the bicycle frame

Such a steering limiting device is described in the prior-art document EP 1 787 899 A. Said document discloses the features of the preamble of claim 1.

A similar steering limiting device, although known and appreciated, has an important limitation, which is constituted by the fact that actually it cannot be installed on those bicycle models which are not provided with a handlebar stem projecting from the frame tube and where, consequently, there is no space for assembling it.

A second important limitation lies in that said steering limiting device comprises as a whole three external projections, meaning the two radial stop projections of the first part and the reference rod of the second part, which project from the bicycle at the level of the steering unit.

These three projections, protruding in said position, may give origin to the risk of clothing items getting undesirably caught in them, as well as to the risk of injury in case of fall or also in the case where the bicycle is seized in order to move it manually.

Furthermore, said known device is not suited to be installed on racing bicycles and sports bicycles in general, as the protruding projections, in addition to not being aesthetically pleasant, negatively affect the aerodynamic characteristics of the handlebar and the frame.

It is the task of the present invention to provide a steering limiting device for bicycles and similar vehicles which is capable of overcoming the above-mentioned drawbacks and limitations of the known art.

It is another task of the invention to provide a steering unit for bicycles and similar vehicles which incorporates a similar steering limiting device.

More specifically, it is an object of the invention to provide a steering limiting device which is safer, meaning less dangerous, than the devices of the known type.

It is another object of the invention to provide a steering limiting device which does not affect the aerodynamic characteristics of the bicycle on which it is installed in a negative manner.

The task as well as the objects mentioned above are fulfilled by a steering limiting device for bicycles and similar vehicles according to claim 1, and by a steering unit according to claim 10.

Further characteristics of the steering limiting device for bicycles and similar vehicles according to claim 1 are described in the dependent claims.

The above-mentioned task and objects, together with the advantages that are mentioned below, are highlighted in the description of an embodiment of the invention, which is provided by way of non-limiting example making reference to the attached drawings, wherein:
- Figure 1 shows a perspective view of a bicycle frame incorporating a steering limiting device according to the invention;
- Figure 2 shows a perspective sectional view of the steering unit of the bicycle frame shown in Figure 1;
- Figure 3 shows a perspective side sectional view of a steering unit according to the invention;

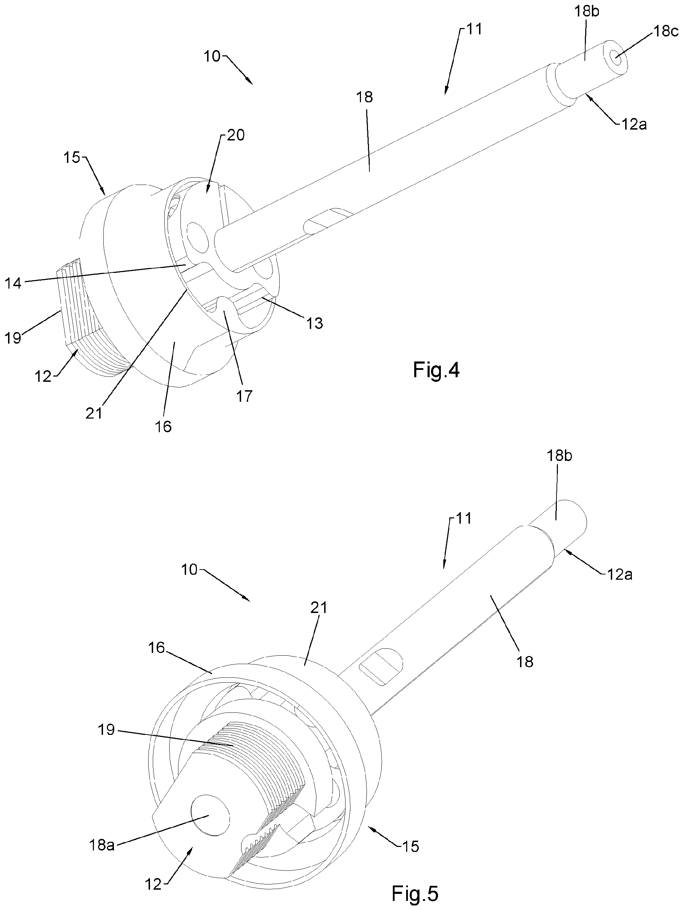

- Figure 4 shows a perspective view of a steering limiting device according to the invention;
- Figure 5 shows another perspective view of the steering limiting device shown in Figure 4;
- Figure 6 shows a side sectional view of the steering limiting device according to the invention;
- Figure 7 shows a cross section view of the steering limiting device according to the invention;
- Figure 8 shows a stop configuration of the device according to the invention;
- Figure 9 shows the opposite stop configuration of the same device according to the invention.

With reference to the above-mentioned figures, a steering limiting device, especially for bicycles and similar vehicles, according to the invention is indicated as a whole by the numeral **10.**

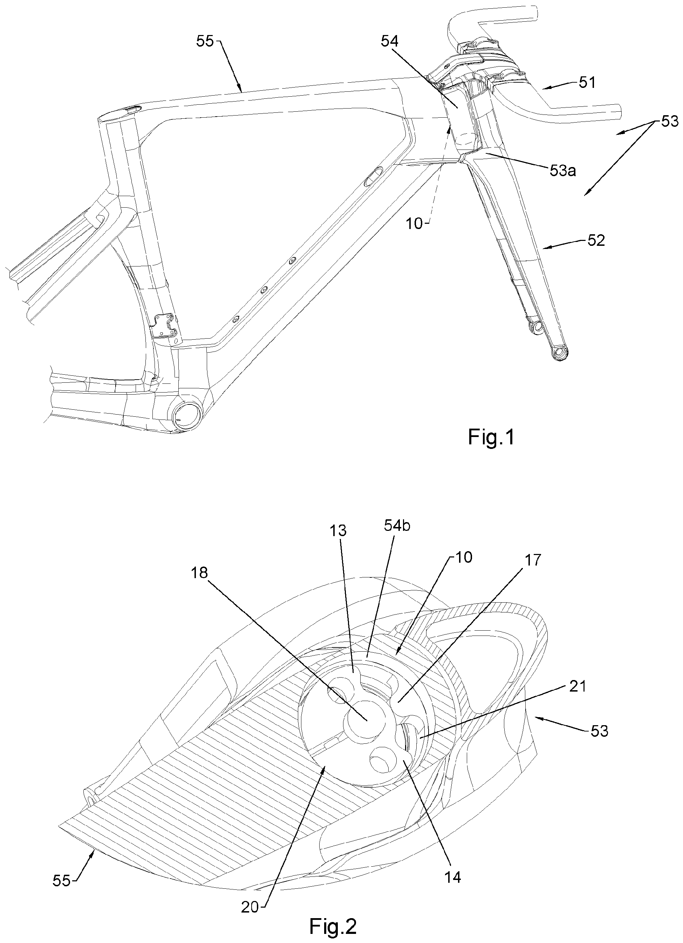

Said steering limiting device **10** for bicycles and similar vehicles comprises:
- a first part **11** configured to be fixed to a coupling portion **53a** of a handlebar-fork assembly **53;** said first part **11** comprises a fixing portion **12** for fixing it to the coupling portion **53a;** said first part **11** comprises two radial stop projections **13** and **14** which are described in greater detail below and are clearly visible in Figures 2, 3, 7, 8 and 9;
- a second part **15** configured to be fixed to a head tube **54** of a frame **55** of a bicycle or a similar vehicle; the second part **15** comprises a fixing portion **16** for fixing it to the head tube **54;** the second part **15** comprises also a reference projection **17** configured to be positioned between the radial stop projections **13, 14** of the first part **11.**

The specific characteristic of the steering limiting device **10** according to the invention lies in that:
- the first part **11** comprises a central supporting body **18** and a shaped external portion **20** on which the radial stop projections **13, 14** are defined; the fixing portion **12** of the first part **11** comprises an engagement portion **19** suited to be engaged in a corresponding seat **56** of the handlebar-fork assembly **53;** for example, in particular, the seat **56** is defined in the coupling portion **53a;**
- the second part **15** comprises an annular body **21** suited to be inserted in a tubular cavity **54a** of said head tube **54** of a bicycle frame **55;** the annular body **21** comprises the reference projection **17,** wherein said reference projection **17** is configured to protrude radially from the annular body **21** towards the inside of the annular body **21** itself.

The first part **11** and the second part **15** of the steering limiting device **10** can rotate with respect to each other.

More specifically, the first part **11** and the second part **15** of the steering limiting device **10** can rotate with respect to each other around the same rotation axis.

Said rotation axis must be understood as the steering axis of the bicycle on which the steering limiting device **10** is installed.

More specifically, in the present example of embodiment, which obviously must be understood as being a non-limiting example of the invention, the central supporting body **18** comprises a rigid bar.

More specifically, the central supporting body **18** is constituted by a rigid bar.

In the embodiment of the invention described herein, which provides a non-limiting example of the invention itself, the first part **11** comprises a first fixing portion **12,** mentioned above, and a second fixing portion **12a.**

The first fixing portion **12** is fixed, in a way to be understood as known, to a first end **18a** of the central supporting body **18,** that is, of the rigid bar.

The first fixing portion **12** comprises the engagement portion **19.**

Therefore, the engagement portion **19** is fixed to the first end **18a** of the central supporting body **18.**

The second fixing portion **12a** comprises the opposite second end **18b** of the central supporting body **18.**

More specifically, the second fixing portion **12a** is constituted by the opposite second end **18b** of the central supporting body **18.**

The second end **18b** is shaped in such a way that it can be fixed to an upper coupling area **53c** of the coupling portion **53a** of the handlebar-fork assembly **53.**

The coupling area **53c** is located on the opposite side of the head tube **54** with respect to the seat **56** for the engagement portion **19.**

More specifically, the seat **56** is defined on a lower coupling area **53b** of the coupling portion **53a.**

The coupling portion **53a** comprises a lower coupling area **53b** and an upper coupling area **53c.**

In the present example of embodiment, the second fixing portion **12a** comprises a section of the second end **18b** of the central supporting body **18.** The second end **18b** is provided with a threaded hole **18c.**

The coupling area **53c** is provided with a through hole **57** for a threaded element **58,** the latter being configured to be screwed into the threaded hole **18c.**

A cable sleeve **60** can be provided at the level of the second end **18b** of the central supporting body **18,** said cable sleeve being shaped to allow the passage of the cables of the brakes and of the derailleurs arranged on the handlebar **51** towards the inside of the frame **55** itself.

The fixing portion **16** of the second part **15** is constituted by an annular element at least partially in the shape of a truncated cone.

Said fixing portion **16** is suited to be inserted in a corresponding counter-shaped seat **54b** at one end of the tubular cavity **54a.**

The fixing portion **16** is fixed in the counter-shaped seat **54b** in such a way that it is integral with the head tube **54** and thus with the frame **55.**

The fixing portion **16** is fixed in the counter-shaped seat **54b** through interference, or through a gluing operation, or with other systems to be understood as known per se.

The annular body **21** of the second part **15** is shaped so that it can be arranged inside the tubular cavity **54a.**

The shaped external portion **20** of the first part **11** comprises a shaped element suited to surround the central supporting body **18,** meaning the rigid bar, said shaped element being provided with two opposite locking projections **20a** and **20b** defined thereon, which are suited to surround the bar and to be joined to each other through means for the progressive approach of a first locking projection to the other, so as to create a vice system intended to fix it to the central supporting body **18** itself.

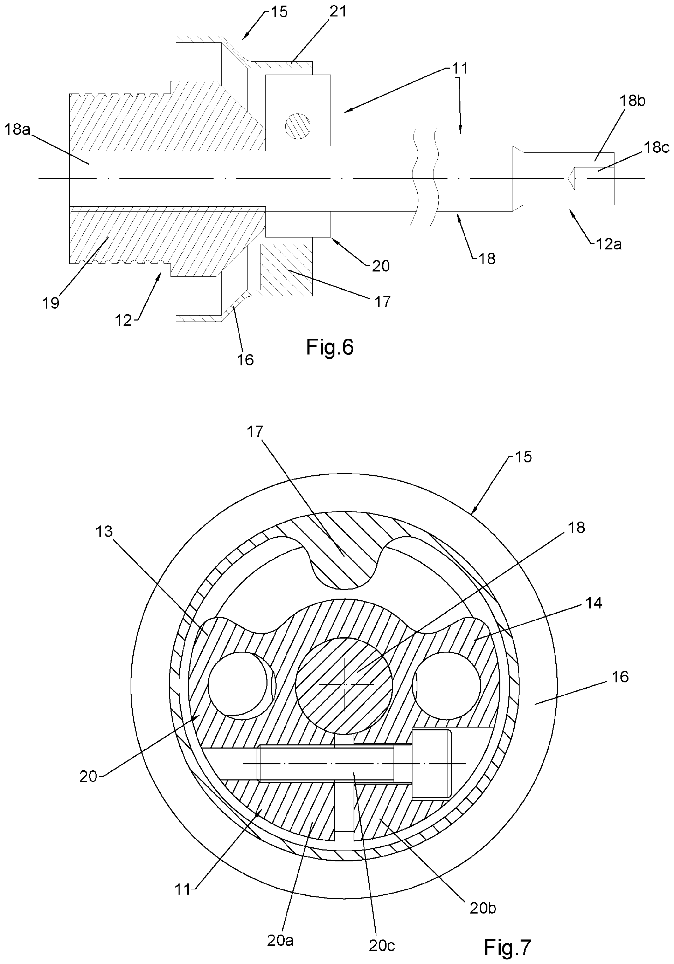

The progressive approach means are constituted, for example, by a threaded element **20c** suited to pass through a first through hole defined on a locking projection **20b** and to be screwed in a second threaded hole defined in the other locking projection **20a,** as clearly illustrated in Figure 7.

The annular body **21,** with the reference projection **17,** and the fixing portion **16** are integrated in a single body, as clearly shown in Figure 6.

Said single body is made, for example, of a plastic material.

The fixing portion **12** of the first part **11** is at least partially positioned inside the fixing portion **16** of the second part **15.**

Friction reduction means **80** such as a bearing with rolling elements, for example a ball bearing or a roller bearing, or other similar and equivalent means can be interposed between the fixing portion **12** of the first part **11** and the fixing portion **16** of the second part **15.**

The subject of the invention includes also a steering unit **50** for bicycles, comprising a steering limiting device **10** as described above.

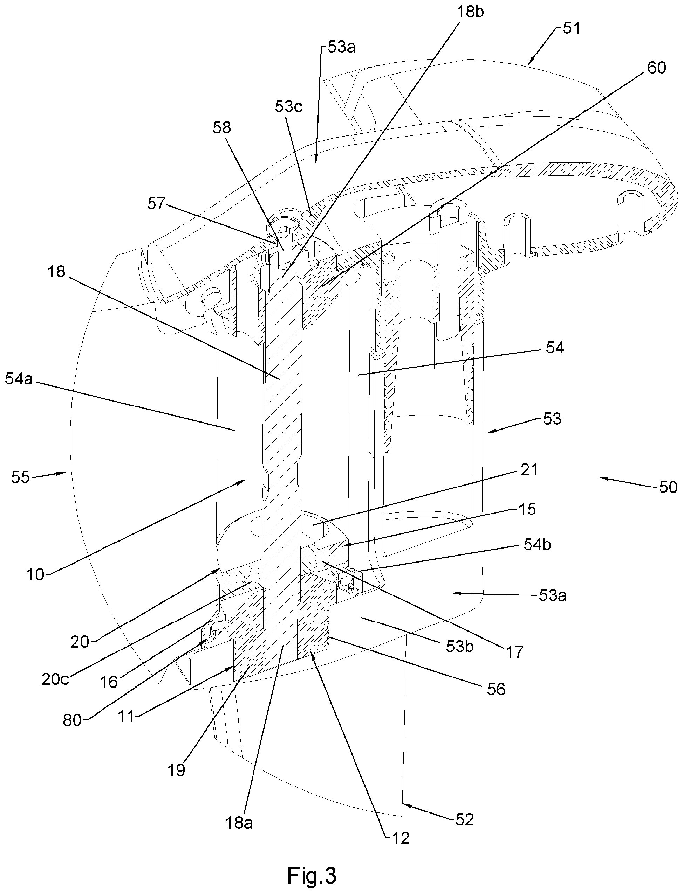

In particular, the steering unit **50** comprises:
- a handlebar **51** and a fork **52** clearly visible in Figures 1 and 3, defining a handlebar-fork assembly **53,** the latter comprising a coupling portion **53a** for coupling it with a head tube **54,**
- a head tube **54** of a bicycle frame **55,** inside which a tubular cavity **54a** is defined, said head tube **54** being interposed between the handlebar **51** and the fork **52,**
- a steering limiting device **10** for bicycles and similar vehicles,
   said steering limiting device **10** comprising:
- a first part **11** configured to be fixed to the coupling portion **53a** of the handlebar-fork assembly **53,** said first part **11** comprising at least one fixing portion **12** suited to fix it to the coupling portion **53a** of the handlebar-fork assembly **53,** and comprising two radial stop projections **13** and **14,**
- a second part **15** configured to be fixed to the head tube **54,** said second part **15** comprising at least one fixing portion **16** suited to fix it to the head tube **54;** said second part **15** comprises a reference projection **17** configured to be positioned between the radial stop projections **13** and **14** of the first part **11.**

The specific characteristic of the steering unit **50** according to the invention lies in that:
- the fixing portion **12** of the first part **11** comprises a central supporting body **18** and an engagement portion **19** suited to be engaged in a corresponding seat **56,** clearly visible in Figure 3, of the handlebar-fork assembly **53,** the first part **11** comprising a shaped external portion **20** on which the radial stop projections **13** and **14** are defined;
- the second part **15** comprises an annular body **21** inserted in the tubular cavity **55** of the head tube **54,** the reference projection **17** being configured so that it protrudes radially from the annular body **21** towards the inside of the annular body **21** itself.

In the present example of embodiment, which obviously must be understood as being a non-limiting example of the invention, the coupling portion **53a** of the handlebar-fork assembly **53** comprises the lower coupling area **53b** and the upper coupling area **53c.**

The lower coupling area **53b** is part of the fork **52.**

The upper coupling area **53c** of the coupling portion **53a** of the handlebar-fork assembly **53** is part of the handlebar **51,** said upper coupling area **53c** being located on the opposite side of the head tube **54** with respect to the seat **56** for the engagement portion **19.**

It has thus been observed that the invention fulfils its task and achieves the set objects.

More specifically, the invention provides a steering limiting device which is safer, meaning less dangerous, than the devices of the known type, since all the projections are located inside the steering unit, and in particular inside the head tube of the frame, so that they are not visible and cannot represent a risk in any way.

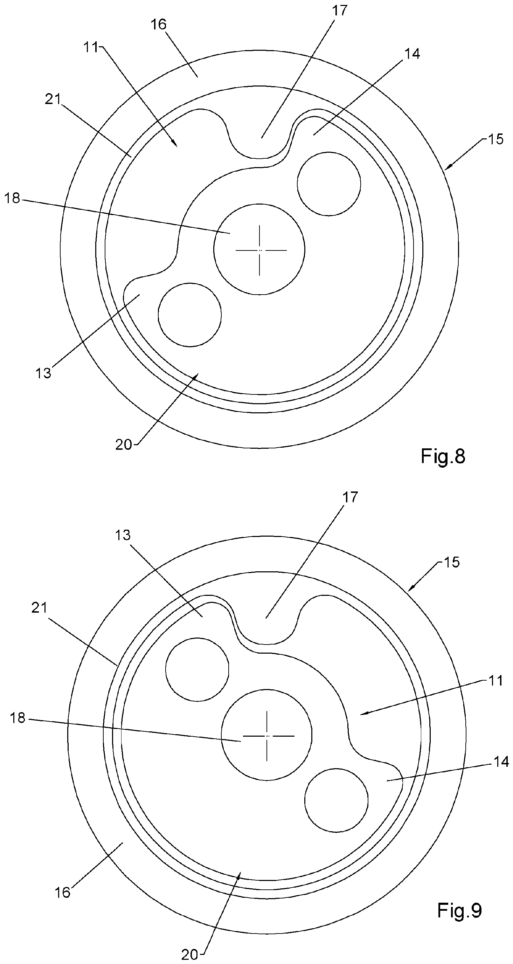

Figures 8 and 9 exemplify the operation of the steering limiting device **10** according to the invention.

In both figures the reference projection **17,** which is integral with the head tube **54** and thus with the frame **55,** is shown in central position.

Figure 8 shows a first situation in which the steering extent is limited, with a first radial stop projection **14** in contact with the reference projection **17.**

Figure 9 shows a second situation in which the steering extent is limited, with the second opposite radial stop projection **13** in contact with the reference projection **17.**

The angular distance between the radial stop projections **13** and **14** defines the maximum steering angle allowed by the device **10** according to the invention.

A steering limiting device has thus been provided, which does not affect the aerodynamic characteristics of the bicycle on which it is installed in a negative manner, since none of its parts projects towards the outside of the bicycle frame.

Furthermore, the device according to the invention is simple to install during the assembly of the steering unit.

In practice, any components and materials can be used, provided that they are compatible with the intended use, and any size and shape can be selected, according to the needs and to the state of the art.

Where the characteristics and techniques mentioned in any of the claims are followed by reference signs, it must be understood that these reference signs are used only for the purpose of making the claims easier to understand, and consequently these reference signs do not have any limiting effect on the interpretation of each element identified by way of example by the same reference signs.

## Claims

1. Steering limiting device (10) for bicycles and similar vehicles, comprising:
- a first part (11) configured to be fixed to a coupling portion of a handlebar-fork assembly of a bicycle or a similar vehicle, said first part (11) comprising at least one fixing portion (12) for fixing it to said coupling portion of a handlebar-fork assembly, said first part (11) comprising two radial stop projections (13, 14),
- a second part (15) configured to be fixed to a head tube of a frame of a bicycle or a similar vehicle, said second part (15) comprising at least one fixing portion (16) for fixing it to a head tube of a frame of a bicycle or a similar vehicle, said second part (15) comprising a reference projection (17) configured to be positioned between said radial stop projections (13, 14) of said first part (11), wherein
- said first part (11) comprises a central supporting body (18) and an external shaped portion (20) on which said radial stop projections (13, 14) are defined, said at least one fixing portion (12) of said first part (11) comprising an engagement portion (19) suited to be engaged in a corresponding seat of said handlebar-fork assembly said steering limiting device (10) being **characterised in that**
- said second part (15) comprises an annular body (21) suited to be inserted in a tubular cavity of said head tube of a bicycle frame, said annular body (21) comprising said reference projection (17), said reference projection (17) being configured so that it protrudes radially from said annular body (21) towards the inside of said annular body (21).

2. Steering limiting device (10) according to claim 1, **characterized in that** said central supporting body (18) comprises a rigid bar.

3. Steering limiting device (10) according to one or more of the preceding claims, **characterized in that** said first part (11) comprises a first fixing portion (12) and a second fixing portion (12a).

4. Steering limiting device (10) according to one or more of the preceding claims, **characterized in that** said first fixing portion (12) is fixed to a first end (18a) of the central supporting body (18).

5. Steering limiting device (10) according to one or more of the preceding claims, **characterized in that** said second fixing portion (12a) is constituted by an opposite second end (18b) of the central supporting body (18).

6. Steering limiting device (10) according to claim 5, **characterized in that** at the level of said second end (18b) of said central supporting body (18) there is a cable sleeve (60).

7. Steering limiting device (10) according to one or more of the preceding claims, **characterized in that** said fixing portion (16) of said second part (15) comprises an annular element at least partially in the shape of a truncated cone.

8. Steering limiting device (10) according to one or more of the preceding claims, **characterized in that** said annular body (21) of said second part (15) is shaped in such a way that it can be arranged inside a tubular cavity of a head tube.

9. Steering limiting device (10) according to one or more of the preceding claims, **characterized in that** said annular body (21) with the reference projection (17) and said fixing portion (16) are integrated in a single body.

10. Bicycle frame (55) with a head tube (54) and a steering unit (50), comprising:
- a handlebar (51) and a fork (52) defining a handlebar-fork assembly (53), said handlebar-fork assembly (53) comprising a coupling portion (53a) for coupling it with a head tube (54),
- wherein a tubular cavity (54a) is defined inside the head tube (54) of the bicycle frame (55), said head tube (54) being interposed between said handlebar (51) and said fork (52),
said steering unit (50) being **characterized in that** it comprises a steering limiting device (10) for bicycles and similar vehicles according to one or more of the preceding claims.

## Patentansprüche

1. Vorrichtung zur Lenkeinschlagsbegrenzung (10) für Fahrräder und ähnliche Fahrzeuge, Folgendes umfassend:
- einen ersten Teil (11), dazu konfiguriert, an einem Kupplungsabschnitt einer Lenker-Gabel-Einheit eines Fahrrads oder eines ähnlichen Fahrzeugs befestigt zu werden, wobei der besagte erste Teil (11) wenigstens einen Befestigungsabschnitt (12) zu seiner Befestigung an dem besagten Kupplungsabschnitt einer Lenker-Gabel-Einheit umfasst, wobei der besagte erste Teil (11) zwei radiale Anschlagvorsprünge (13, 14) umfasst,
- einen zweiten Teil (15), dazu konfiguriert, am Steuerrohr eines Rahmens eines Fahrrads oder eines ähnlichen Fahrzeugs befestigt zu werden, wobei der besagte zweite Teil (15) wenigstens einen Befestigungsabschnitt (16) zu seiner Befestigung am Steuerrohr eines Rahmens eines Fahrrads oder eines ähnlichen Fahrzeugs umfasst, wobei der besagte zweite Teil (15) einen Bezugsvorsprung (17) umfasst, der dazu konfiguriert ist, zwischen den besagten radialen Anschlagvorsprüngen (13, 14) des besagten ersten Teils (11) positioniert zu werden,
wobei
- der besagte erste Teil (11) einen zentralen Stützkörper (18) und einen externen, geformten Abschnitt (20) umfasst, an dem die besagten radialen Anschlagvorsprünge (13, 14) definiert sind, wobei der besagte wenigstens eine Befestigungsabschnitt (12) des besagten ersten Teils (11) einen Einrastbereich (19) umfasst, der dazu geeignet ist, in eine entsprechende Aufnahme an der besagten Lenker-Gabel-Einheit einzurasten,
wobei die besagte Vorrichtung zur Lenkeinschlagsbegrenzung (10) **dadurch gekennzeichnet ist, dass**
- der besagte zweite Teil (15) einen ringförmigen Körper (21) umfasst, dazu geeignet, in einen röhrenförmigen Hohlraum des besagten Steuerrohrs eines Fahrradrahmens eingesetzt zu werden, wobei der besagte ringförmige Körper (21) den besagten Bezugsvorsprung (17) umfasst, wobei der besagte Bezugsvorsprung (17) so konfiguriert ist, dass er radial aus dem besagten ringförmigen Körper (21) in das Innere des besagten ringförmigen Körpers (21) ragt.

2. Vorrichtung zur Lenkeinschlagsbegrenzung (10) nach Patentanspruch 1, **dadurch gekennzeichnet, dass** der besagte zentrale Stützkörper (18) eine starre Stange umfasst.

3. Vorrichtung zur Lenkeinschlagsbegrenzung (10) nach einem oder mehreren der vorstehenden Patentansprüche, **dadurch gekennzeichnet, dass** der besagte erste Teil (11) einen ersten Befestigungsabschnitt (12) und einen zweiten Befestigungsabschnitt (12a) umfasst.

4. Vorrichtung zur Lenkeinschlagsbegrenzung (10) nach einem oder mehreren der vorstehenden Patentansprüche, **dadurch gekennzeichnet, dass** der besagte erste Befestigungsabschnitt (12) an einem ersten Ende (18a) des zentralen Stützkörpers (18) befestigt ist.

5. Vorrichtung zur Lenkeinschlagsbegrenzung (10) nach einem oder mehreren der vorstehenden Patentansprüche, **dadurch gekennzeichnet, dass** der besagte zweite Befestigungsabschnitt (12a) durch ein entgegengesetztes zweites Ende (18b) des zentralen Stützkörpers (18) gebildet ist.

6. Vorrichtung zur Lenkeinschlagsbegrenzung (10) nach Patentanspruch 5, **dadurch gekennzeichnet, dass** sich auf Ebene des besagten zweiten Endes (18b) des besagten zentralen Stützkörpers (18) eine Kabelmuffe (60) befindet.

7. Vorrichtung zur Lenkeinschlagsbegrenzung (10) nach einem oder mehreren der vorstehenden Patentansprüche, **dadurch gekennzeichnet, dass** der besagte Befestigungsabschnitt (16) des besagten zweiten Teils (15) ein ringförmiges Element umfasst, das wenigstens teilweise kegelstumpfförmig ist.

8. Vorrichtung zur Lenkeinschlagsbegrenzung (10) nach einem oder mehreren der vorstehenden Patentansprüche, **dadurch gekennzeichnet, dass** der besagte ringförmige Körper (21) des besagten zweiten Teils (15) so geformt ist, dass er innerhalb eines röhrenförmigen Hohlraums eines Steuerrohrs angeordnet werden kann.

9. Vorrichtung zur Lenkeinschlagsbegrenzung (10) nach einem oder mehreren der vorstehenden Patentansprüche, **dadurch gekennzeichnet, dass** der besagte ringförmige Körper (21) mit dem Bezugsvorsprung (17) und der besagte Befestigungsabschnitt (16) in einen einzigen Körper integriert sind.

10. Fahrradrahmen (55) mit einem Steuerrohr (54) und einer Lenkeinheit (50), Folgendes umfassend:
- einen Lenker (51) und eine Gabel (52), die eine Lenker-Gabel-Einheit (53) definieren, wobei die besagte Lenker-Gabel-Einheit (53) einen Kupplungsabschnitt (53a) zur Kupplung mit einem Steuerrohr (54) umfasst,
wobei innerhalb des Steuerrohrs (54) des Fahrradrahmens (55) ein röhrenförmiger Hohlraum (54a) definiert ist, wobei das besagte Steuerrohr (54) zwischen dem besagten Lenker (51) und der besagten Gabel (52) eingefügt ist,
wobei die besagte Lenkeinheit (50) **dadurch gekennzeichnet ist, dass** sie eine Vorrichtung zur Lenkeinschlagsbegrenzung (10) für Fahrräder und ähnliche Fahrzeuge nach einem oder mehreren der vorstehenden Patentansprüche umfasst.

## Revendications

1. Dispositif limiteur de direction (10) pour bicyclettes et véhicules similaires, comprenant:
- une première partie (11), configurée pour être fixée à une portion d'accouplement d'un ensemble guidon-fourche d'une bicyclette ou un véhicule similaire, ladite première partie (11) comprenant au moins une portion de fixation (12) apte à la fixer à ladite portion d'accouplement d'un ensemble guidon-fourche, ladite première partie (11) comprenant deux saillies radiales de fin de course (13, 14),
- une deuxième partie (15), configurée pour être fixée à un tube de direction d'un cadre d'une bicyclette ou un véhicule similaire, ladite deuxième partie (15) comprenant au moins une portion de fixation (16) apte à la fixer à un tube de direction d'un cadre de bicyclette ou un véhicule similaire, ladite deuxième partie (15) comprenant une saillie de référence (17) configurée de manière à être positionnée entre lesdites saillies radiales de fin de course (13, 14) de ladite première partie (11),
où
- ladite première partie (11) comprend un corps central de support (18) et une portion extérieure galbée (20) sur laquelle lesdites saillies radiales de fin de course (13, 14) sont définies, ladite au moins une portion de fixation (12) de ladite première partie (11) comprenant une portion d'engagement (19) apte à être engagée dans un logement correspondant dudit ensemble guidon-fourche,
ledit dispositif limiteur de direction (10) étant **caractérisé en ce que**
- la deuxième partie (15) comprend un corps annulaire (21) apte à être inséré à l'intérieur d'une cavité tubulaire dudit tube de direction d'un cadre de bicyclette, ledit corps annulaire (21) comprenant ladite saillie de référence (17), ladite saillie de référence (17) étant configurée de manière à saillir radialement dudit corps annulaire (21) vers l'intérieur dudit corps annulaire (21).

2. Dispositif limiteur de direction (10) selon la revendication 1, **caractérisé en ce que** ledit corps central de support (18) comprend une barre rigide.

3. Dispositif limiteur de direction (10) selon l'une ou plusieurs des revendications précédentes, **caractérisé en ce que** ladite première partie (11) comprend une première portion de fixation (12) et une deuxième portion de fixation (12a).

4. Dispositif limiteur de direction (10) selon l'une ou plusieurs des revendications précédentes, **caractérisé en ce que** ladite première portion de fixation (12) est fixée à une première extrémité (18a) du corps central de support (18).

5. Dispositif limiteur de direction (10) selon l'une ou plusieurs des revendications précédentes, **caractérisé en ce que** ladite deuxième portion de fixation (12a) est constituée d'une deuxième extrémité opposée (18b) du corps central de support (18).

6. Dispositif limiteur de direction (10) selon la revendication 5, **caractérisé en ce qu'à** hauteur de ladite deuxième extrémité (18b) dudit corps central de support (18) est présent un manchon de câble (60).

7. Dispositif limiteur de direction (10) selon l'une ou plusieurs des revendications précédentes, **caractérisé en ce que** ladite portion de fixation (16) de ladite deuxième partie (15) comprend un élément annulaire au moins partiellement en forme de cône tronqué.

8. Dispositif limiteur de direction (10) selon l'une ou plusieurs des revendications précédentes, **caractérisé en ce que** ledit corps annulaire (21) de ladite deuxième partie (15) est galbé de manière à se disposer à l'intérieur d'une cavité tubulaire d'un tube de direction.

9. Dispositif limiteur de direction (10) selon l'une ou plusieurs des revendications précédentes, **caractérisé en ce que** ledit corps annulaire (21) avec la saillie de référence (17) et ladite portion de fixation (16) sont intégrés dans un seul corps.

10. Cadre de bicyclette (55) avec un tube de direction (54) et une unité de direction (50), comprenant:
- un guidon (51) et une fourche (52), définissant un ensemble guidon-fourche (53), ledit ensemble guidon-fourche (53) comprenant une portion d'accouplement (53a) apte à s'accoupler à un tube de direction (54),
où une cavité tubulaire (54a) est définie à l'intérieur du tube de direction (54) du cadre de bicyclette (55), ledit tube de direction (54) étant interposé entre ledit guidon (51) et ladite fourche (52),
ladite unité de direction (50) étant **caractérisé en ce qu'elle** comprend un dispositif limiteur de direction (10) pour bicyclettes et véhicules similaires selon l'une ou plusieurs des revendications précédentes.
